# EUROPÄISCHE PATENTSCHRIFT

(11) **EP 3 114 255 B1**
(45) Veröffentlichungstag und Bekanntmachung des Hinweises auf die Patenterteilung: **06.12.2017**
(21) Anmeldenummer: 15710429.0
(22) Anmeldetag: 26.02.2015
(51) Int. Cl.: C23F 11/10, C09K 5/10, C09K 5/20, C10M 169/04, C10M 173/00, C11D 1/94, C11D 11/00, C23F 11/14

(54) **KORROSIONSINHIBIERENDE ZUSAMMENSETZUNGEN**
CORROSION-INHIBITING COMPOSITIONS
COMPOSITIONS INHIBANT LA CORROSION

(30) Priorität: 06.03.2014 DE 102014003215
(43) Veröffentlichungstag der Anmeldung: 11.01.2017
(73) Patentinhaber: Clariant International Ltd, 4132 Muttenz (CH)
(72) Erfinder: KLUG, Peter, 63762 Großostheim (DE); KUPFER, Rainer, 65795 Hattersheim (DE); FLEISCHER, Steffen, 36329 Romrod (DE)
(74) Vertreter: Mikulecky, Klaus
(86) Internationale Anmeldenummer: PCT/EP2015/000443
(87) Internationale Veröffentlichungsnummer: WO 2015/131987

(56) Entgegenhaltungen:
- WO-A1-00/65014
- WO-A1-92/06154

## Beschreibung

Die Erfindung betrifft ein Emulsionskonzentrat, das eine Zusammensetzung aus N-Methyl-N-acylglucamin, Fettsäure oder deren Salze und Alkanolamin als Korrosionsinhibitor enthält. Mittel mit korrosionsinhibierender Wirkung werden in unterschiedlichen Anwendungen gesucht, beispielsweise für die Herstellung wässriger Metallbehandlungs- und Metallbearbeitungsflüssigkeiten, insbesondere von Korrosionsschutz-, Reiniger- und Kühlschmierstoffemulsionen. Korrosionsinhibitoren sollen Metalle wie beispielsweise Eisen, Aluminium, Zink, Kupfer oder deren Legierungen vor Korrosion während technischer Bearbeitungsstufen der Metallteile schützen und die Rostbildung verhindern.
Als wasserlösliche Korrosionsinhibitoren sind eine Vielzahl anorganischer und organischer Verbindungen bekannt. Anorganische Korrosionsinhibitoren können beispielsweise auf Chromaten, Nitriten oder Phosphaten aufgebaut sein, die jedoch aus toxikologischen und aus ökologischen Gründen mehr oder weniger nachteilig sind. Organische Korrosionsinhibitoren basieren häufig auf Carboxylaten, Aminen, Amiden oder auf stickstoffhaltigen heterozyklischen Verbindungen.
Polyhydroxyfettsäureamide und deren Verwendung als nichtionisches Tensid in Wasch- und Reinigungsmittel sind in zahlreichen Patentschriften beschrieben. WO 9412609 lehrt Wasch- und Reinigungsmittel, enthaltend Polyhydroxyfettsäureamid mit guter reinigender Wirkung, insbesondere gegen fettige Anschmutzungen auf Textilien oder Geschirr.
WO 9841601 lehrt Reinigungsmittel, enthaltend Polyhydroxyfettsäureamid, die fettigen und öligen Schmutz auf Kochutensilien ablösen und nicht ätzend sind.

WO 9523840 lehrt Waschmittel, enthaltend Polyhydroxyfettsäureamid, die sich durch guten Farbschutz auszeichnen.
EP0745719 beschreibt die Verwendung von Kohlenhydratverbindungen, darunter auch Polyhydroxyfettsäureamide als Hilfsmittel zum Färben oder Bedrucken von Fasermaterialien mit faserreaktiven Farbstoffen. WO9206154 A beschreibt eine wässrige Zusammensetzung, enthaltend N-Methyl-N-C₁₂₋₁₄-acylglucamin, C₁₂₋₁₄ Fettsäuren, Monoethanolamine, Borsäure, Natriumhydroxid, Ethanol und Wasser, die als Waschmittel verwendet wird. WO0065014 A1 offenbart eine wässrige Zusammensetzung, enthaltend N-Cocoyl-N-Methylglucamine, C₁₂₋₁₈ Fettsäuren, Monoethanolamine, Borsäure, Ethanol und Wasser, die als Waschmittel verwendet wird. Aufgabe vorliegender Erfindung war es, wasserlösliche Emulsionskonzentrate bereit zu stellen, die den bekannten Emulsionen insbesondere im Hinblick auf Umweltverträglichkeit überlegen sind und sehr gute korrosionsinhibierende Wirkung zeigen.

Es wurde überraschend gefunden, dass ein Emulsionskonzentrat, enthaltend eine Zusammensetzung, enthaltend mindestens ein N-Methyl-N-acylglucamin, eine oder mehrere organische Säuren und ein oder mehrere Alkanolamine, eine signifikante korrosionsinhibierende Wirkung auf Metalloberflächen zeigt und sich zudem durch eine gute Umweltverträglichkeit und eine sichere Verwendung auszeichnet.

Gegenstand der Erfindung ist daher ein Emulsionskonzentrat, enthaltend 5 bis 40 Gew.-% einer Zusammensetzung, enthaltend
a) mindestens ein N-Methyl-N-acylglucamin der Formel (I) 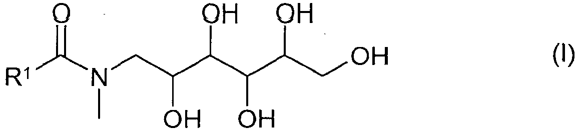 wobei R¹ für eine lineare oder verzweigte, gesättigte oder ungesättigte Kohlenwasserstoffkette mit 7 bis 21 Kohlenstoffatomen steht,
b) eine oder mehrere organische Säuren der Formel (II), bzw deren Salze,

   R² - COOM (II)

   wobei
   R² für eine lineare oder verzweigte Alkylgruppe oder eine lineare oder verzweigte, ein- oder mehrfach ungesättigte Alkenylgruppe mit 5 bis 29 Kohlenstoffatomen, und
   M für Wasserstoff oder für ein oder mehrere Kationen stehen, wobei die Kationen in ladungsausgleichenden Mengen vorliegen.
      und
c) ein oder mehrere Alkanolamine der Formel (III)

   NR¹R²R³ (III)

   wobei
   R¹, R² und R³ für Wasserstoff, eine lineare oder verzweigte Alkylgruppe mit 1 bis 4 Kohlenstoffatomen, eine Cycloalkylgruppe mit 5 bis 7 Kohlenstoffatomen, eine lineare oder verzweigte Hydroxyalkylgruppe mit 2 bis 5 Kohlenstoffatomen und 1 oder 2 Hydroxygruppen oder eine Hydroxyethergruppe mit 2 bis 6 Kohlenstoffatomen steht, mit der Maßgabe, dass mindestens einer der Reste eine Hydroxyalkylgruppe oder eine Hydroxethergruppe ist, und 60 bis 95 Gew.-% eines oder mehrerer Öle. Weitere Bezeichnungen für N-Methyl-N-acylglucamin sind N-Methyl-N-1-Desoxysorbitol-Fettsäureamid, N-Acyl-N-methyl-glucamin, Glucamid oder N-Methyl-N-alkylglucamid.
Vorzugsweise handelt es sich bei M um ein Li⁺-, Na⁺-, K⁺-, Mg⁺⁺-, Ca⁺⁺-, Al^{+++,} NH₄⁺, Monoalkylammonium-, Dialkylammonium-, Trialkylammonium- und/oder Tetraalkylammoniumion. Die Alkylsubstituenten der Amoniumionen sind unabhängig voneinander (C₁-C₂₂)-Alkylreste, die gegebenenfalls mit bis zu 3 (C₂-C₁₀)-Hydroxyalkylgruppen besetzt sein können.

Die erfindungsgemäßen Emulsionskonzentrate schützen Metalloberflächen effektiv vor Korrosion, sind oberflächenaktiv und weisen eine hohe Wasserlöslichkeit auf, die für die Formulierung wässriger Konzentrate für Metallbehandlungs- und Metallbearbeitungsflüssigkeiten unabdingbar ist.
Ein weiterer Gegenstand der Erfindung ist die Verwendung der erfindungsgemäßen ölhaltigen, wassermischbaren Emulsionskonzentraten, die durch Verdünnung mit Wasser anwendungsfertige Korrosionsschutz-, Reiniger- und Kühlschmierstoffemulsionen liefern als Bestandteil von Korrosionsschutzzusammensetzungen, Reinigern für Metalle und Kühlschmierstoffemulsionen.

In einer bevorzugten Ausführungsform der Erfindung steht R¹ für eine lineare oder verzweigte, gesättigte oder ungesättigte Kohlenwasserstoffgruppe mit 11 bis 17 Kohlenstoffatomen. Insbesondere steht R¹ für eine lineare oder verzweigte Alkyl- oder Alkenylgruppe. Besonders bevorzugt steht R¹ für einen linearen, gesättigten oder ungesättigten C₁₁, C₁₃, C₁₅ oder C₁₇ Rest, insbesondere für einen ungesättigten C₁₇ Rest.
Eine besonders bevorzugte Ausführungsform der Erfindung sind Zusammensetzungen, enthaltend mindestens 2 bis 6 verschiedenen N-Methyl-N-acylglucamine, wobei die 2 bis 6 verschiedenen N-Methyl-N-acylglucamine unterschiedliche Acylgruppen (-CO R¹) aufweisen.

Eine besonders bevorzugte Ausführungsform der Erfindung sind Zusammensetzungen, in denen mindestens 80 Gew.-% des Bestandteils a) eine Mischung von N-Methyl-N-C₁₂-acylglucamin und N-Methyl-N-C₁₄-acylglucamin sind.

Eine ebenso besonders bevorzugte Ausführungsform der Erfindung sind Zusammensetzungen, in denen mindestens 80 Gew.-% des Bestandteils a) eine Mischung von N-Methyl-N-C₁₆-acylglucamin und N-Methyl-N-C₁₈-acylglucamin sind.

Die N-Acyl-N-Methylglucamine gemäß Formel (I) können in der in EP 0 550 637 beschriebenen Weise aus den korrespondierenden Fettsäuremethylestern und N-Methylglucamin hergestellt werden. Die Fettsäuren der Fettsäuremethylester sind vorzugsweise ausgewählt aus der Gruppe umfassend 9-Octadecensäure (Ölsäure), Octadeca-9,12-diensäure (Linolsäure), Octansäure (Caprylsäure), Decansäure (Caprinsäure), Dodecansäure (Laurinsäure), Tetradecansäure (Myristinsäure), Hexadecansäure (Palmitinsäure), Octadecansäure (Stearinsäure) und *n*-Docosansäure (Behensäure).

In einer weiteren bevorzugten Ausführungsform der Erfindung steht R² für eine lineare oder verzweigte, gesättigte Alkylgruppe oder eine ein- oder mehrfach ungesättigte Alkenylgruppe mit 7 bis 21, insbesondere mit 11 bis 17 Kohlenstoffatomen.

Bestandteil b) ist vorzugsweise ausgewählt aus: Caprylsäure, Pelargonsäure, Caprinsäure, Laurinsäure, Myristinsäure, Palmitinsäure, Margarinsäure, Stearinsäure, Arachinsäure, Behensäure, Lignocerinsäure, Cerotinsäure, Montansäure, Melissinsäure, Undecylensäure, Myristoleinsäure, Palmitoleinsäure, Petroselinsäure, Ölsäure, Elaidinsäure, Vaccensäure, Gadoleinsäure, Icosensäure, Cetoleinsäure (hydrierten) Erucasäure, Nervonsäure, Linolsäure, α-Linolensäure, Gamma-Linolensäure, Calendulasäure, Punicinsäure, Alpha-Elaeostearinsäure, Beta-Elaeostearinsäure, Arachidonsäure, Eicosapentaensäure, Clupanodonsäure, Docosahexaensäure, Vernolsäure, Ricinolsäure und deren Salzen. Besonders bevorzugt sind insbesondere Fettsäuren aus Kokos-, Palmkern-, Oliven- und Tallöl (TOFA), oder Talgfett und deren Salze Bevorzugt werden Fettsäuresalze als Li⁺-, Na⁺-, K⁺-, Mg⁺⁺-, Ca⁺⁺-, Al⁺⁺⁺- und/oder NH₄⁺-Salze eingesetzt. Ebenfalls bevorzugt sind die Monoalkylammonium-, Dialkylammonium-, Trialkylammonium- und/oder Tetraalkylammoniumsalze, wobei es sich bei den Alkylsubstituenten der Amine unabhängig voneinander um (C₁-C₂₂)-Alkylreste handeln kann, die gegebenenfalls mit bis zu 3 (C₂-C₁₀)-Hydroxyalkylgruppen besetzt sein können.

Besonders bevorzugt sind Zusammensetzungen enthaltend N-Acyl-N-Methylglucaminen gemäß der Formel (I), eine Tallölfettsäure (TOFA) und/ oder Kokosfettsäure (CC) bzw. deren Salze und mindestens ein Alkanolamin. Tallölfettsäure (TOFA) ist wie im RÖMPP (online-ID=RD-20-00149) beschrieben eine Monocarbonsäure gemäß der Formel (II) mit vorwiegend ein-, zwei- und dreifach ungesättigten C₁₈-Kohlenstoffketten. Kokosfettsäure setzt sich hauptsächlich zusammen aus C₈-C₁₈-Fettsäuren, vorwiegend Capryl-, Laurin-, Caprin-, Palmitin-, Stearin-, Myristin- und Ölsäure.

Die Alkanolamine, die dem Bestandteil c) der erfindungsgemäßen Zusammensetzung bilden, sind vorzugsweise ausgewählt aus Monoethanolamin HOCH₂CH₂NH₂,, Diethanolamin (HOCH₂CH₂)₂NH, Triethanolamin (HOCH₂CH₂)₃N, Monoisopropanolamin CH₃CHOHCH₂NH₂, 2-Amino-2-methyl-1-propanol HOCH₂C(CH₃)₂NH₂,, 2-Amino-1-butanol, CH₃CH₂CHNH₂CH₂OH, Diglykolamin HOCH₂-CH₂OCH₂CH₂NH₂,, Methylethanolamin HOCH₂CH₂N(CH₃)H, Dimethylethanolamin HOCH₂CH₂N(CH₃)2, Methyldiethanolamin (HOCH₂CH₂)₂NCH₃, Ethylaminoethanol HOCH₂CH₂N(H)(CH₂CH₃), Diethylaminoethanol HOCH₂CH₂N(CH₂CH₃)₂ 2-Amino-2-ethyl-1,3-propandiol HOCH₂C(C₂H₅)NH₂CH₂OH, Dimethylamino-2-propanol. CH₃CHOHCH₂N(CH₃)₂, Isopropylaminoethanol HOCH₂CH₂N(H)(CH(CH₃)₂), Isopropylaminodiethanol (HOCH₂CH₂)₂N(CH(CH₃)₂), Diisopropylaminoethanol HOCH₂CH₂N(CH(CH₃)₂)₂, n-Butylaminoethanol HOCH₂CH₂N(H)((CH2)₃CH₃), Dibutylaminoethanol HOCH₂CH₂N(((CH2)₃CH₃)₂, n-Butyldiethanolamin (HOCH₂CH₂N(((CH2)₃CH₃)₂, t-Butylethanol HOCH₂CH₂NHCCH₃)₃ und N-Cyclohexyldiethanolamin (HOCH₂CH₂)₂N(C6H₁₁).

Besonders bevorzugt enthalten die Zusammensetzungen mindestens ein Alkanolamin ausgewählt aus Monoethanolamin, Diethanolamin, Triethanolamin, Diglykolamin, Monoisopropanolamin und 2-Amino-2-methyl-1-propanol und Mischungen davon.

Insbesondere bevorzugt sind Zusammensetzungen, enthaltend
a) 1 bis 50 Gew.-% eines oderer mehrerer Methylglucamine gemäß der Formel (I),
b) 0,1 bis 23 Gew.-% mindestens einer organischen Säure oder deren Salz gemäß Formel (II) und
c) 0,05 bis 42 Gew.-% mindestens eines Alkanolamins.

Außerordentlich bevorzugt sind Zusammensetzungen, enthaltend
a) 2 bis 20 Gew.-% eines oderer mehrerer Methylglucamine gemäß der Formel (I),
b) 0,5 bis 15 Gew.-% mindestens einer organischen Säure oder deren Salz gemäß Formel (II) und
c) 0,1 bis 30 Gew.-% mindestens eines Alkanolamins.

In einer weiteren bevorzugten Ausführungsform enthält die vorstehend angegebene Zusammensetzung weitere Komponenten ad 100 Gew.-%, als Bestandteil d).

Als weitere Komponente/n d) können die Zusammensetzungen bevorzugt einen oder mehrere Emulgatoren, ein oder mehrere Biozide, einen oder mehrere weitere Korrosionsinhibitoren, ein oder mehrere AW-Addtive, ein oder mehrere EP-Addtive, ein oder mehrere Entschäumer, ein oder mehrere Antioxidantien, ein oder mehrere Coupling Agents, ein oder mehrere Alkali- oder Erdalkalimetalle, ein oder mehrere Lösevermittler, pH-Regulatoren, sowie Wasser enthalten.

Die Zusammensetzungen enthalten vorzugsweise Emulgatoren ausgewählt aus anionischen, nichtionischen, kationischen und amphoteren Emulgatoren. Bevorzugt enthalten die Zusammensetzungen anionische und/oder nichtionische Emulgatoren.

Als anionische Emulgatoren kommen in Betracht:
- Sulfonate, insbesondere Petrolsulfonate, Olefinsulfonate, d. h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschliessende alkalische oder saure Hydrolyse der Sulfonierungsprodukte erhält, C₁₂-C₁₈-Alkansulfonate, sekundäre Alkansulfonate, C₉-C₁₃-Alkylbenzolsulfonate, α-Naphtlylsulfonate, sowie die Ester von [α]-Sulfofettsäuren (Estersulfonate), zum Beispiel die [a]-sulfonierten Methylester der hydrierten Kokos-, Palmkern- oder Talgfettsäuren.
- Sulfate, insbesondere Alk(en)ylsulfate, wie die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole, sowie Alk(en)ylethersulfate, bevorzugt die Schwefelsäuremonoester der mit 1 bis 6 Mol Ethylenoxid ethoxylierten geradkettigen oder verzweigten C₇-C₂₁-Alkohole, wie 2-Methyl-verzweigte C₉-C₁₁-Alkohole.
- Carboxylate, wie Fettsäureseifen, insbesondere die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische. Naphtensäureseifen.
- Alkylethercarboxylate gemäß der Formel (IV)

   RO-(CH₂CH₂O-)ₙCH₂-COOM (IV)

   wobei
   R eine lineare oder verzweigte, gesättigte oder mit einer oder mehreren Doppelbindungen ungesättigte Kohlenwasserstoffgruppe mit 8 bis 22 Kohlenstoffatomen ist,
   n eine Zahl von 1 bis 20, und
   M ein Gegenion ist
- Alkenylimidobernsteinsäurecarboxylat
- Fettsäureamide
- Phosphorsäureester, alkoxylierte Phosphorsäureester.

Die anionischen Emulgatoren können in Form ihrer Natrium-, Kalium- oder Magnesium- oder Ammoniumsalze vorliegen.

Die Zusammensetzungen können einen oder mehrere anionische Emulgatoren in Mengen von 0 Gew.-% bis 50 Gew.-%, bevorzugt 0,5 Gew.-% bis 40 Gew.-%, besonders bevorzugt 1,0 Gew.-% bis 30 Gew.-% bezogen auf die Zusammensetzung, bestehend aus den Komponenten a) bis d), enthalten.

Als nichtionische Emulgatoren kommen in Betracht:
- alkoxylierte Fettalkohole, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol, in denen der Alkoholrest linear oder bevorzugt in 2-Stellung methylverzweigt sein kann bzw. lineare und methylverzweigte Reste im G. Zu den bevorzugten ethoxylierten Alkoholen gehören beispielsweise C₁₂-C₁₄-Alkohole mit 3 EO, 4 EO oder 7 EO, C₉-C₁₁-Alkohol mit 7 EO, C₁₃-C₁₅-Alkohole mit 3 EO, 5 EO, 7 EO oder 8 EO, C₁₂-C₁₈-Alkohole mit 3 EO, 5 EO oder 7 EO und Mischungen aus diesen, wie Mischungen aus C₁₂-C₁₄-Alkohol mit 3 EO und C₁₂-C₁₈-Alkohol, mit 7 EO Gemisch enthalten kann, so wie sie üblicherweise in Oxoalkoholresten vorliegen.
- Methylester alkoxylierter C₈-C₂₂-Fettsäuren mit 1 bis 100 Alkoxygruppen, wobei die Alkoxygruppen aus einer oder unterschiedlichen Einheiten ausgewählt aus CH₂CH₂O, C₃H₆O und C₄H₈O bestehen können.
- Fettsäureamide gemäß der Formel (V) 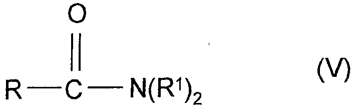 worin
   - R: eine Alkylgruppe mit 7 bis 21, bevorzugt 9 bis 17 Kohlenstoffatomen ist und
   - jeder Rest R¹: Wasserstoff, C₁-C₄-Alkyl, C₁-C₄-Hydroxyalkyl oder (C₂H₄O)_{X}H bedeutet, wobei
   - x: für 1, 2 oder 3 steht.
   Bevorzugt sind C₈-C₂₀-Amide, -monoethanolamide, -diethanolamide und -isopropanolamide.
- Alkylphenolpolyglycolether, bevorzugt die Kondensationsprodukte von Alkylphenolen mit einer C₆- bis C₂₀-Alkylgruppe, die entweder linear oder verzweigt sein kann, mit Alkylenoxiden.
- Aminoxide der Formel (VI) 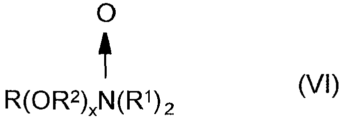 worin
   - R: eine Alkyl-, Hydroxyalkyl- oder Alkylphenolgruppe mit einer Kettenlänge von 8 bis 22 Kohlenstoffatomen,
   - R²: eine Alkylen- oder Hydroxyalkylengruppe mit 2 bis 3 Kohlenstoffatomen oder Mischungen hiervon,
   - jeder Rest R¹: eine Alkyl- oder Hydroxyalkylgruppe mit 1 bis 3 Kohlenstoffatomen oder eine Polyethylenoxidgruppe mit 1 bis 3 Ethylenoxideinheiten und
   - x: eine Zahl von 0 bis 10 sind.
- Alkylpolyglycoside der Formel (VII) 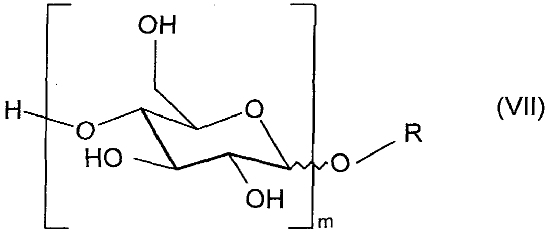 wobei R für einen primären geradkettigen oder methylverzweigten, insbesondere in 2-Stellung methylverzweigten, aliphatischen Rest mit 8 bis 22, vorzugsweise 12 bis 18 Kohlenstoffatomen und m für 1 bis 5 steht.

Die Zusammensetzungen können einen oder mehrere nichtionische Emulgatoren in Mengen von 0 Gew.-% bis 50 Gew.-%, bevorzugt 0,5 Gew.-% bis 30 Gew.-%, besonders bevorzugt 1,0 Gew.-% bis 20 Gew.-%, bezogen auf Zusammensetzungen bestehend aus den Komponenten a) bis d), enthalten.

Die Zusammensetzungen können einen oder mehrere anionische, nichtionische, kationischen und amphoteren Emulgatoren in Mengen von 0 Gew.-% bis 50 Gew.-%, bevorzugt 0,5 Gew.-% bis 40 Gew.-%, besonders bevorzugt 1,0 Gew.-% bis 35 Gew.-% bezogen auf die Zusammensetzungen, bestehend aus den Komponenten a) bis d), enthalten.

Wässrige Metallbehandlungs- und Metallbearbeitungsflüssigkeiten sind ein idealer Lebensraum für Mikroorganismen. Im wässrigen Milieu liegt bei günstigen Temperaturen ein Nährstoffüberangebot vor. Ein ungehemmtes Mikrobenwachstum führt zu einem Abbau von Einzelkomponenten, verändert den pH-Wert und destabilisiert folglich die Emulsion. Des weiteren können Ablagerungen von Biomaterial zu einer Verkürzung der Kühlschmierstoff-Badstandzeit führen. Biozide bewirken eine Abtötung von Bakterien, Hefen und Pilzen.

Eine bevorzugte Ausführungsform der Erfindung sind daher Zusammensetzungen, enthaltend N-Methyl-N-acylglucamine der Formel (I), eine oder mehrere Fettsäuren, bzw deren Salze ein oder mehrere Alkanolamine und mindestens ein oder mehrere Biozide.

Die Biozide können ausgewählt sein aus:
N-(3-Aminopropyl)-N-dodecylpropan-1,3-diamin, 1-Aza-3,7-dioxa-5-ethylbicyclo[3.3.0]-octan , 5-Ethyl-3,7-dioxa-1-azabicyclo[3.3.0]-octan 1,2-Benzisothiazol-3(2H)-on (BIT)
Benzylalkohol-mono(poly)hemiformal ((Benzyloxy)methanol)
Biphenyl-2-ol (2-Phenylphenol)
1,3-Bis(hydroxymethyl)-5,5-dimethyl- imidazolidin-2,4-dion (1,3-Dimethylol-5,5-dimethyl-hydantoin, DMDMH)
Bismorpholinomethan, 4,4'-Methylen-bis-morpholin 2-Butyl-benzo[d]isothiazol-3-on (BBIT)
cis-1-(3-Chlorallyl)-3,5,7-triaza-1-azoniaadamantan-chlorid (cis-CTAC)
p-Chlor-m-kresol (4-Chlor-3-methyl-phenol, Chlorkresol)
5-Chlor-2-methyl-2,3-dihydro-isothiazol-3-on / 2-Methyl-2,3-dihydro-isothiazol-3-on (3(2H)-Isothiazolon, 5-Chlor-2-methyl, Gemisch mit 2-Methyl-3(2H)-isothiazolon) (CMI/MI, CMIT/MIT)
N-Cyclohexyl-hydroxydiazen-1-oxid, Kaliumsalz (N-Cyclohexyl-N-nitrosohydroxylamin, Kaliumsalz, (N-Cyclohexyl-diazenium-dioxy)-kalium, K-HDO)
2,2-Dibrom-2-cyanacetamid (2,2-Dibrom-3-nitrilo-propionamid, DBNPA)
1,6-Dihydroxy-2,5-dioxahexan ((Ethylendioxy)dimethanol)
4,4'-Dimethyl-oxazolidin
1,3-Dimethylol-5,5-dimethyl-hydantoin-siehe 1,3-Bis(hydroxymethyl)-5,5-dimethyl-imidazolidin-2,4-dion
5-Ethyl-3,7-dioxa-1-azabicyclo-[3.3.0]octan (7a-Ethyldihydro-1H,3H,5H-oxazolo-[3,4-c]-oxazol, 1-Aza-3,7-dioxa-5-ethyl-bicyclo[3.3.0]octan) (EDHO)
(Ethylendioxy)dimethanol, 1,6-Dihydroxy-2,5-dioxahexan Glutardialdehyd (Glutaral)
(2,2',2"-(Hexahydro-1,3,5-triazin-1,3,5-triyl)-triethanol) - siehe 1,3,5-Tris(2-hydroxyethyl)-hexahydro-1,3,5-triazin
Hexamethylentetramin-3-chlorallyl-chlorid (Methenamin-3-chlorallyl-chlorid,
(1,3,5,7-Tetraaza-1-(3-chlorprop-2-enyl)- tricyclo[3.3.1.1|<3,7>decanchlorid, CTAC 3-lod-2-propinyl-butyl-carbamat (IPBC)
Methenamin-3-chlorallyl-chlorid, Hexamethylentetramin-3-chlorallyl-chlorid 2-Methyl-2,3-dihydroisothiazol-3-on (2-Methyl-2H-isothiazol-3-on, MI, MIT)
3,3'-Methylen-bis(5-methyloxazolidin) (MBO)
4,4'-Methylen-bis-morpholin (N,N'-Methylen-bis-morpholin, Methylen-bis-tetrahydro-1,4-oxazin, Bismorpholinomethan)
Natrium-pyrithion, Pyridin-2-thiol-1-oxid, Natriumsalz
2-n-Octyl-2,3-dihydro-isothiazol-3-on (2-Octyl-2H-isothiazol-3-on) (OIT, "Octhilinone")
4-(2-Nitrobutyl)morpholin
2-Phenoxyethanol
2-Phenylphenol, Biphenyl-2-ol
Pyridin-2-thiol-1-oxid, Natriumsalz ("Natrium-pyrithion")
1,3,5,7-Tetraaza-1-(3-chlorprop-2-enyl)-tricyclo[3.3.1.1<3,7>]decanchlorid, Hexamethylentetramin-3-chlorallyl-chlorid
1,3,4,6-Tetra(hydroxymethyl)-[3aH,6aH]-1,3,4,6-tetraazabicyclo-octan-2,5-dion)
(Tetrahydro-1,3,4,6-tetrakis(hydroxy-methyl)imidazo[4,5-d]imidazol-2,5,(1H,3H)-dion, TMAD)
1,3,5-Tris(2-hydroxyethyl)-hexahydro-1,3,5-triazin (2,2',2"-(Hexahydro-1,3,5-triazin-1,3,5-triyl)-triethanol, HHT)
1,3,5-Tris-(2-hydroxypropyl)-hexa-hydro-1,3,5-triazin(a,a',a"-Trimethyl-1,3,5-triazin-1,3,5- (2H,4H,6H)-triethanol)
6-Acetoxy-2,4-dimethyl-m-dioxan- 2,6-Dimethyl-1,3-dioxan-4-yl-acetat
Alkyl(C₁₂-C₁₄)[(ethylphenyl)methyl]-dimethyl-ammoniumchlorid (stöchiometrisch)
N-Alkyl(C₁₀-C₁₆)-trimethylen-diamin und Reaktionsprodukte mit Chloressigsäure
1-[2-(Allyloxy)-2-(2,4-dichlorphenyl)-ethyl]-1H-imidazol ("Imazalil")
(+/-)1-[2-(ß-Allyloxy)-2-(2,4-dichlorphenyl)-ethyl]-1H-imidazol ("Imazalil technisch rein")
Aluminiumnatriumsilikat-Silberkomplex / Silber-ZeolitH
Ameisensäure
Bardap 26, Poly(oxy-1,2-ethandiyl)-a-[2-didecylmethyl-ammonium)ethyl]-w-hydroxypropionat
Benzothiazol-2-thiol
(Benzothiazol-2-ylthio)methyl-thiocyanat ("TCMTB")
3-Benzo(b)thien-2-yl-5,6-dihydro-1,4,2-oxathiazin-4-oxid ("Bethoxazin")
Benzyl-alkyl(C₁₂-C₁₄)-dimethyl-Ammoniumchlorid
Benzyl-alkyl(C₁₂-C₁₆)-dimethyl-ammoniumchlorid
Benzyl-alkyl(C₁₂-C₁₈)-dimethyl-Ammoniumchlorid
Benzyl-alkyl(C₁₂-C₁₈ gesättigt und ungesättigt, Talgalkyl, Kokosalkyl, Sojaalkyl)-dimethyl-ammoniumchloride, -bromide oder -hydroxide
Bethoxazin, 3-Benzo(b)thien-2-yl-5,6-dihydro-1,4,2-oxathiazin-4-oxid
Bis(3-aminopropyl)-octylamin
1,3-Bis(hydroxymethyl)harnstoff (1,3-Dimethylol-harnstoff)
1,3-Bis(hydroxymethyl)harnstoff, Reaktionsprodukte mit 2-(2-Butoxyethoxy)-ethanol, Ethylenglykol und Formaldehyd ("Formaldehyddepot alpha")
BKC, Benzyl-alkyldimethyl-ammonium- chloride, -bromide oder -hydroxide
2-Brom-2-(brommethyl)pentan-dinitril, 1,2-Dibrom-2,4-dicyan-butan
4-Brom-2-(4-chlorphenyl)-1-(ethoxymethyl)-5-(trifluormethyl)-1H-pyrrol 3-carbonitril
("Chlorfenapyr")
1,3-Brom-chlor-5,5-dimethyl-imidazolidin-2,4-dion (Bromchlor-5,5-dimethylhydantoin)
2-Brom-2-nitropropan-1,3-diol ("Bronopol")
(2-Brom-2-nitrovinyl)benzol
2-tert-Butylaminoethyl-methacrylat, Homopolymer
cis-4-[3-(p-tert-Butylphenyl)-2-methyl-propyl]-2,6-dimethylmorpholin
("Fenpropimorph")
Carbendazim, 2-(Methoxycarbonylamino)benzimidazol
[2-[[2-[(2-Carboxyethyl)(2-hydroxyethyl)-amino]ethyl)amino]-2-oxoethyl]kokosalkyl-dimethyl-ammoniumhydroxide, innere Salze(quarternäre
Ammoniumverbindungen)
2-Chloracetamid
3-(3-Chlor-4-methylphenyl)-1,1-dimethyl-harnstoff ("Chlortoluron")
Chlorfenapyr, 4-Brom-2-(4-chlorphenyl)-1-(ethoxy-methyl)-5-(trifluormethyl)-1H-pyrrol-3-carbonitril
DDAC , Dialkyl-dimethyl-ammonium-chloride, -bromide oder -methylsulfate Dialkyl(C₈-C₁₀)-dimethyl-ammonium-chloride
Dialkyl(C₆-C₁₈ gesättigt und ungesättigt, Talgalkyl, Kokosalkyl, Sojaalkyl)-dimethyl-ammoniumchloride, -bromide oder -methylsulfate (DDAC)
1,2-Dibrom-2,4-dicyan-butan (2-Brom-2-(brommethyl)pentan-dinitril)
2,4-Dichlor-benzylalkohol (2,4-Dichlor-phenylmethanol)
Dichlorophen, 2,2'-Methylen-bis(4-chlorphenol)phenol
1-[[2-(2,4-Dichlorphenyl)-4-propyl-1,3-dioxolan-2-yl]methyl]-1H-1,2,4-triazol
("Propiconazol")
Didecyl-dimethyl-ammoniumchlorid
N-Didecyl-N-dipolyethoxy-ammoniumborat/Didecylpolyoxethyl-ammoniumborat
(CAS: Borsäure, Polymer mit N-Decyl-1-decanamin, Oxiran (Ethylenoxid) und 1,2-Propandiol)
1,3-Didecyl-2-methyl-1H-imidazolium-chlorid
p-[Di(iodmethyl)sulfonyl]toluol
N²,N⁴-Diisopropyl-6-methyl-thio-1,3,5-triazin-2,4-diamin ("Prometryn") Dikalium-disulfit
2,6-Dimethyl-1,3-dioxan-4-yl-acetat (6-Acetoxy-2,4-dimethyl-m-dioxan)
1,3-Dimethylol-harnstoff, 1,3-Bis(hydroxymethyl)harnstoff
Dinatrium-disulfit
Dinatrium-ethylen-bis(dithiocarbamat) ("Nabam")
Dinatrium-octaborat-tetrahydrat
2,2'-Dithiobis-[N-methylbenzamid]
Fenpropimorph, cis-4-[3-(p-tert-Butylphenyl)-2-methyl- propyl]-2,6-dimethylmorpholin
Fluometuron - 1,1-Dimethyl-3-(3-trifluormethylphenyl)-harnstoff
Borsäure,
Formaldehyd
Formaldehyddepot alpha, 1,3-Bis(hydroxymethyl)harnstoff, Reaktionsprodukte mit 2-(2-Butoxy-ethoxy)ethanol, Ethylenglykol und Formaldehyd
5-Hydroxymethoxymethyl-1-aza-3,7-dioxa-bicyclo[3.3.0]octan (16,0 %) /
5-Hydroxymethyl-1-aza-3,7-dioxa-bicyclo-[3.3.0]octan (28,8 %) /5-Hydroxypoly(methylenoxy)methyl-1-aza-3,7-dioxabicyclo[3.3.0]octan (5,2 %) / Wasser (50 %)- Gemisch
2-(Hydroxymethyl)-2-nitro-1,3-propandiol-(Nitromethylidin-trimethanol, "Tris Nitro") 1-Hydroxy-2(1H)-pyridinon (Hydroxy-2-pyridon)
Imizali, 1-[2-Allyloxy)-2-(2,4-dichlorphenyl)- ethyl]-1H-imidazol
Imazalil techn.rein, (+/-)-1-*[*2-(ß-Allyloxy)-2-(2,4-dichlorphenyl-ethyl]1H-imidazol
3-(4-Isopropylphenyl)-1,1-dimethyl-harnstoff ("Isoproturon")
Kalium-2-biphenylat (Kalium-o-phenyl-phenolat)
Kalium-dimethyldithiocarbamat
Kaliumsulfit
Lignin
Metam-Natrium, Natrium-methyldithiocarbamat
2-(Methoxycarbonylamino)benz-imidazol (Methyl-benzimidazol-2-yl-carbamat, "Carbendazim")
2,2'-Methylen-bis(4-chlorphenol)-phenol ("Dichlorophen")
Methylen-dithiocyanat
L(+)-Milchsäure
Naba, Dinatrium-ethylen-bis(dithiocarbamat)
Natrium-2-biphenylat (Natrium-o-phenyl-phenolat)
Natriumbromid
Natrium-p-chlor-m-kresolat
Natrium-dimethyldithiocarbamat
Natrium-hydrogen-2,2'-methylen-bis[4-chlorphenolat]
Natriumhydrogensulfit
Natrium-methyldithiocarbamat ("Metam-Natrium")
Natrium-o-phenyl-phenolat, Natrium-2-biphenylat
Natriumsulfit
Nitromethylidin-trimethanol, 2-(Hydroxymethyl)-2-nitro-1,3-propandiol
Oligo(2-(2-ethoxy)ethoxyethyl-guanidium-chlorid)
1-Phenoxy-2-propanol / 2-Phenoxy-propanol-Gemisch
Phthalaldehyd
Poly(hexamethylendiamin-guanidinium-chlorid)
Poly(oxy-1,2-ethandiyl)-a-[2-(didecylmethyl-ammonium)ethyl]-w-hydroxypropanoat
("Bardap 26")
Prometryn, N²,N⁴-Diisopropyl-6-methyl-thio-1,3,5-triazin-2,4-diamin
2-Propandiol, Polymer mit Borsäure, N-Decyl-1-decanamin und Ethylen-oxid
(Oxiran) - siehe N-Didecyl-N-dipolyethoxy-ammoniumborat / Didecylpolyoxethylammoniumborat
2-Propenal-Propan-1,2-diol-Copolymer
Propiconazol, 1-[[2-(2,4-Dichlorphenyl)-4-propyl-1,3-dioxolan-2-yl]methyl]1H-1,2,4-triazol
Pyridin-2-thiol-1-oxid, Zinksalz ("Zink-pyrithion", "Pyrithionzink")
Schwefeldioxid
Silberchlorid
TCMTB, (Benzothiazol-2-ylthio)methyl-thiocyanat
N,N,N',N'-Tetramethyl-ethylendiamin-bis (2-chlorethyl)ether-Copolymer
(N,N,N',N'-Tetramethyl-1,2-ethandiamin, Polymer mit 1,1'-Oxybis(2-chlorethan)) 2-(Thiazol-4-yl)benzimidazol ("Thiabendazol")
Tris Nitro, 2-(Hydroxymethyl)-2-nitro-1,3-propandiol
Zink-pyrithion, Pyridin-2-thiol-1-oxid, Zinksalz

Eine bevorzugte Ausführungsform der Erfindung sind Zusammensetzungen, enthaltend ein oder mehrere Biozide. ausgewählt aus der Gruppe, Borsäure, 1,2-Benzisorhiazol-3-(2H)-on (BIT), 3(2H)-isothiazolone, 2-methyl, Methanol,[1,2-ethanediylbis(oxy)bis- (Glyoxalmonoethylenacetal), Natrium-2-Pyridinethion-1-oxid (Natriumpyrithione), 1,3,5-triazine-1,3,5(2H, 4H, 6H)-triethanol, Morpholin, 4,4'-methylenbis, 1H, 3H, 5H-oxazolo [3,4-c] oxazol, 5-Ethyl-3,7-dioxa-1-azabicyclo [3.3.0] octan, 3-Iod-2-propinyl-butyl-carbamat (IPBC).

Die Konzentration des einen oder der mehreren Bioziden in den Zusammensetzungen beträgt vorzugsweise 0,001 bis 5,0 Gew.-% bezogen auf die für die Anwendung fertigen Zusammensetzungen, beispielsweise bezogen auf eine Metallbearbeitungsflüssigkeit.

Die Zusammensetzungen können zusätzlich zu den erfindungsgemäß als Korrosionsinhibitor verwendeten N-Methyl-N-acylglucaminen gemäß der Formel (I) weitere Korrosionsinhibitoren enthalten, beispielsweise organische Säuren und deren Salze, insbesondere Alkaliseifen, Sulfonate, Amine, deren Anhydride und Salze, Benzoesäurederivate und Borverbindungen.

Die Zusammensetzungen können einen oder mehrere zusätzliche Korrosionsinhibitoren in Mengen von 0 Gew.-% bis 10 Gew.-%, bezogen auf die für die Anwendung fertigen Zusammensetzungen, beispielsweise bezogen eine Metallbearbeitungsflüssigkeit, enthalten.

Vorzugsweise enthalten die Zusammensetzungen Verschleißminderer, sogenannte AW-Additive, die durch Adsorptions- und Chemisorptionsvorgänge an die Metalloberfläche gebunden werden und den Metallabrieb verhindern. AW-Additive sind Zink- und Phosphorverbindungen, bevorzugt Zinkdithiophosphat, Zinkdialkyldithiophosphat, Tricresylphosphat, chlorierte Paraffine, Glycerolmonooleat, Fettsäuren und deren Salze, bevorzugt Stearylsäure, Dialkylhydrogenphosphite, beispielsweise Dilaurylhydrogenphosphite, kommerziell erhältlich als Duraphos® AP-230, Trialkylphosphite, beispielsweise Trilaurylphosphit, kommerziell erhältlich als Duraphos® TLP.

Für Anwendungen bei hohen Drucken sind AW-Additive wirkungslos und erfordern den Einsatz von Extreme Pressure Additives (EP-Additive).

Als EP-Additive werden zumeist schwefel- und phosphorhaltige Verbindungen verwendet. Nicht mehr bzw. kaum noch eingesetzt werden die problematischen chlorhaltigen Verbindungen. Schwefelhaltige Additive bilden bei Eisenwerkstoffen nach vorheriger Adsorption und Chemisorption an der Metalloberfläche Eisensulfidschichten.

Geignet sind Disulfide (inaktiver Schwefelträger - geruchlos), Polysulfide, geschwefelte Olefine, geschwefelte Fettsäureester und Phosphorsäureester, sulfonierte Olefine, Zinkdiphenylsulfid, Methyltrichlorostearat, chloriertes Naphthalin, Fluoroalkylpolysiloxane, neutralisierte oder teilneutralisierte Phosphate und Dithiophosphate.

Die Zusammensetzungen können einen oder mehrere EP-Additive in Mengen von 0 Gew.-% bis 1 Gew.-%, bevorzugt 0,0005 Gew.-% bis 0,5 Gew.-%, besonders bevorzugt 0,005 Gew.-% bis 0,05 Gew.-%, bezogen auf die für die Anwendung fertigen Zusammensetzungen, beispielsweise bezogen auf eine Metallbearbeitungsflüssigkeit, enthalten.

Des Weiteren können die Zusammensetzungen Entschäumer, beispielsweise Silikone, insbesondere Dimethylsilikonpolymere, und Siliziumsäureester und Alkylmethylacrylate enthalten.

Zur Verbesserung der Haltbarkeit können die Zusammensetzungen Antioxidantien enthalten, beispielsweise Phenolderivate, wie 4,4'-Methylen-bis(2,6-di-tert-Butylphenol), 4,4'-bis(2,6-di-tert-Butylphenol), 4,4'-bis(2-Methyl-6-tert-Butylphenol), 2,2'-Methylen-bis(4-Methyl-6-tert-Butylphenol), 4,4'-Butyliden-bis(3-Methyl-6-tert-Butylphenol), 4,4'-iso-Propyliden-bis(2,6-di-tert-Butylphenol), 2,2'-Methylen-bis(4-Methyl-6-Nonylphenol), 2,2'-iso-Butylidene-bis(4,6-di-Methylphenol), 2,2'-5-Methylen-bis(4-Methyl-6-Cyclohexylphenol), 2,6-di-tert-Butyl-4-Methylphenol, 2,6-di-tert-Butyl-4-Ethylphenol, 2,4-di-Methyl-6-tert-Butylphenol, 2,6-di-tert-1-di-Methylamino-p-Cresol, 2,6-di-tert-4-(N,N'-Dimethylaminomethylphenol), 4,4'-Thio-bis(2-Methyl-6-tert-Butylphenol), 2,2'-Thio-bis(4-Methyl-6-tert-Butylphenol), bis(3-Methyl-4-Hydroxy-5-tert-10-Butylbenzyl)-sulfide, and bis(3,5-di-tert-Butyl-4-Hydroxybenzyl), Diphenylaminderivate, wie alkylierte Diphenylamine, Phenyl-α-Naphthylamin und alkylierte α-Naphthylamine. Ebenso geeignet sind Metaldithiocarbamate, insbesondere Zinkdithiocarbamat und 15-Methylenebis(di-Butyldithiocarbamat.

Die Zusammensetzungen können einen oder mehrere Antioxidantien in Mengen von 0 Gew.-% bis 1 Gew.-%, bevorzugt 0,0005 Gew.-% bis 0,5 Gew.-%, besonders bevorzugt 0,005 Gew.-% bis 0,05 Gew.-%, bezogen auf die für die Anwendung fertigen Zusammensetzungen, beispielsweise bezogen auf eine Metallbearbeitungsflüssigkeit, enthalten.

Die Zusammensetzungen können sogenannte Coupling Agents enthalten, die die emulgierende Wirkung der eingesetzten Emulgatoren verstärken. Bevorzugt sind Sulfonate, insbesondere Lignosulfonat, Petroleumsulfonat, Dodecylbenzylsulfonat, Na-Salz und Sulfate, beispielsweise Laurylsulfat, Na-Salz.

Die Zusammensetzungen können einen oder mehrere Coupling Agents in Mengen von 0 Gew.-% bis 10 Gew.-%, bevorzugt 0.005 Gew.-% bis 5 Gew.-%, besonders bevorzugt 0,5 Gew.-% bis 3 Gew.-%, bezogen auf die für die Anwendung fertigen Zusammensetzungen, beispielsweise bezogen auf eine Metallbearbeitungsflüssigkeit, enthalten.

Die Zusammensetzungen können desweiteren Alkalimetall- oder Erdalkalimetallsalze, beispielsweise Natriumcarbonat, Natriumhydrogencarbonat oder Calciumcarbonat enthalten.

Die Zusammensetzungen können einen oder mehrere Alkalimetall- oder Erdalkalimetallsalze in Mengen von 0 Gew.-% bis 5 Gew.-%, bevorzugt 0,005 Gew.-% bis 1 Gew.-%, besonders bevorzugt 0,05 Gew.-% bis 0,8 Gew.-%, bezogen auf die für die Anwendung fertigen Zusammensetzungen, beispielsweise bezogen auf eine Metallbearbeitungsflüssigkeit, enthalten.
Die Zusammensetzungen können Lösevermittler wie beispielsweise Alkohole, Glykole, insbesondere Butyldiglykol, Propylenglykol, Glycerin oder Na-Cumolsulfonat in Mengen von 0 Gew.-% bis 6 Gew.-%, bevorzugt
0,05 Gew.-% bis 5 Gew.-%, besonders bevorzugt 0,5 Gew.-% bis 4 Gew.-%, bezogen auf die für die Anwendung fertigen Zusammensetzungen, beispielsweise bezogen auf eine Metallbearbeitungsflüssigkeit, enthalten.
Der pH-Wert der erfindungsgemäßen Zusammensetzungen sollte im Bereich von 7 bis 12, vorzugsweise von 8 bis 11 sein.
Die oben genannten Zusammensetzungen, enthaltend a) bis d), können als sogenannte "performance packaging" dargeboten werden.
Für die Herstellung von Metallbehandlungs- und Metallbearbeitungsflüssigkeiten werden 5 bis 40 Gew.-%, bevorzugt 10 bis 30 Gew.-%, besonders bevorzugt 15 bis 25 Gew.-% des "performance packaging" mit einem oder mehreren Ölen in den Mengen von 60 bis 95 Gew.-%, bevorzugt 70 bis 90 Gew.-%, besonders bevorzugt 75 bis 85 Gew.-% gemischt, bezogen auf die fertige Mischung aus der oben genannten Zusammensetzung und dem einem oder den mehreren Ölen. Die so erhaltenen Mischungen werden von Fachmann als Emulsionskonzentrate bezeichnet. Diese Emulsionskonzentrate werden vom Anwender vorzugsweise im Volumenverhältnis von einem Teil Emulsionskonzentrat auf 10 bis 50 Teile Wasser verdünnt und beispielsweise als Metallbehandlungs- und Metallbearbeitungsflüssigkeit verwendet.
Aufgrund der selbstemulgierenden Eigenschaften der Emulsionskonzentrate bilden sich die anwendungsfertigen Emulsionen, beispielsweise Metallbehandlungs- und Metallbearbeitungsflüssigkeiten beim Versetzen mit Wasser spontan oder nach geringfügiger mechanischer Bewegung wie beispielsweise Rühren. Diese Emulsion kann beispielsweise als Reinigungs-, Korrosionsschutz- oder Kühlschmierstoffemulsion in der Metallbearbeitung eingesetzt werden. Die Zusammensetzungen aus den Komponenten a) bis c) oder a) bis d) werden für die Herstellung von Emulsionskonzentraten verwendet, indem man 5 bis 40 Gew.-%, bevorzugt 10 bis 30 Gew.-%, besonders bevorzugt 15 bis 25 Gew.-% Zusammensetzung aus den Komponenten a) bis c) oder a) bis d) mit einem oder mehreren Ölen in einer Menge von 60 bis 95 Gew.-%, bevorzugt 70 bis 90 Gew.-%, besonders bevorzugt 75 bis 85 Gew.-%, bezogen auf die Gesamtmenge, enthaltend die Zusammensetzung der Komponenten a) bis c) oder a) bis d) und dem einen oder den mehreren Ölen, mischt.
In einer ebenso bevorzugten Ausführungsform werden 40 bis 70 Gew.-%, bevorzugt 45 bis 60 Gew.-%, besonders bevorzugt 50 bis 55 Gew.-% der oben genannten Zusammensetzung (performance packaging), enthaltend die Komponenten a) bis c) oder a) bis d) mit einem oder mehreren Ölen in den Mengen von 30 bis 60 Gew.-%, bevorzugt 40 bis 55 Gew.-%, besonders bevorzugt 45 bis 50 Gew.-% gemischt, bezogen auf die fertige Mischung aus der oben genannten Zusammensetzung und dem einem oder den mehreren Ölen.
Als das eine oder die mehreren Öle in Betracht kommen Mineralöle, insbesondere Minereralöle mit kinematischen Viskositäten von 5 bis 1000, bevorzugt 10 bis 100, außerordentlich bevorzugt 5 bis 50 mm²/s, gemessen bei 40 °C, Paraffine, Isoparaffine, Cycloparaffine (Naphthene, gesättigte ringförmige Kohlenwasserstoffe), aromatische Kohlenwasserstoffe, synthetische Öle, wie Poly-alpha-Olefine, Polyalkylenglykole (PAG) und Esteröle.
Bevorzugte Esteröle sind:
- Ester einwertiger Alkohole, beispielsweise n-Butyllaurat, n-Butylpalmitat/ -stearat, n-Butylpalmitat/ -stearat, Cetylstearyl-i-nonanoat, Decyloleat, 2-Ethylhexylkokosfettsäureester, 2-Ethylhexyloleat, 2-Ethylhexylpalmitat/ -stearat, 2-Ethylhexyltalgfettsäureester, 2-Hexyldecylpalmitat/ -stearat, n-Hexyllaurat, i-Butyloleat, i-Butylpalmitat/ -stearat, i-Butyltalgfettsäureester, i-Butyl-mischfettsäureester, i-Nonylpalmitat/-stearat, i-Propylmyristat, i-Propylpalmitat, i-Propylpalmitat/ stearat, i-Tridecylpalmitat/ -stearat, Kokosfettalkoholpalmitat/ -stearat, n-Octylcaprylat, Oleylerocat, Oleyloleat, Cetylstearylpalmitat/ -stearat, Cetylstearylbehenat,
- Glycerinester,
   beispielsweise Glycerin-di-oleat, Glycerin-di-plamitat/ -stearat, Glycerin-diester, Glcerin-mono-behenat, Glycerin-mono-myristat, Glycerin-mono-oleat, Glycerin-mono-ricinoleat, Glycerin-mono-talgfettsäureester, Glycerin-tri-fettsäureester, Glycerin-tri-hydrostearat, Glycerin-tri-oleat, Glycerin-tristearat,
- Polyolester,
   beispielsweise Pentaerythrit-tetra-caprinat/ -caprylat, Pentaerythrit-di-oleat, Pentaerythrit-tetra-oleat, Pentaerythritpalmitat/- stearat/, Polyolcaprinat/ -caprylat, Trimethylolpropan-tri-fettsäureester,
- Glykolester,
   beispielsweise Ethylenglycol-mono-palmitat/-stearat, Ethylenglycol-dipalmitat/ -stearat, Polyglycolester, Polyglycolölsäureester, Propylenglycolcaprinat/-caprylat, Propylenglycolölsäureester, Triethylenglycol-di-palmitat/ -stearat, Triethylenglycol-di-caprinat/ -caprylat,
- Dicarbonsäureester,
   beispielsweise Di-n-butyladipat, Di-n-butylsebacat, DI-n-ethylhexylsebacat, Di-octyladipat, Di-cetylstearylphthalat, Oleyl-stearylphthalat,
- Polyolpartialester,
   beispielsweise Propylenglycol-caprinat/ -caprylat, Propylenglycolölsäureester, Triethylenglycol-di-palmitat/ -stearat, Triethylenglycol-di-caprinat/ -caprylat,

### Beispiele

Alle Prozentangaben sind, sofern nicht explizit anders angegeben, als Gewichtsprozente (Gew.-%) zu verstehen.

Bestimmung der korrosionsinhibierenden Wirkung von einer Mischung aus N-Methyl-N-C₁₂-acylglucamin und N-Methyl-N-C₁₄-acylglucamin (Glu1) und einer Mischung aus N-Methyl-N-C₁₆-acylglucamin und N-Methyl-N-C₁₈-acylglucamin (Glu2) in Gegenwart von Tallölfettsäure (TOFA), Kokosfettsäure (CC) und Mono- oder Di- oder Triethanolamin auf Eisen.

Durchgeführt wird ein Korrosionsschutztest nach DIN 51360-2 bei dem Graugussspäne (Typ GG25) auf einem Rundfilter mit je 2 %igen Lösungen der Testformulierungen 1 bis 9 gemäß der Tabelle 1 in Wasser mit 20 Deutschen Härtegraden (20° dH) je 2 Stunden benetzt und die gebildeten Korrosionsrückstände auf dem Filterpapier beurteilt wurden.

Die Beurteilung der Korrosion erfolgt gemäss DIN 51 360-2 folgendermaßen:

| | |
|---|---|
| 0 | keine Korrosion / unverändert |
| 1 | Spuren von Korrosion / höchstens 3 Korrosionsabzeichnungen |
| 2 | leichte Korrosion / nicht mehr als 1 % der Oberfläche verfärbt |
| 3 | mässige Korrosion / nicht mehr als 5% der Oberfläche verfärbt |
| 4 | starke Korrosion / über 5% der Oberfläche verfärbt |

**Tabelle 1: Testformulierungen:**

| Komponente [Gew.-%] | Beispiel | | | | | | | | |
|---|---|---|---|---|---|---|---|---|---|
| | 1(V) | 2 | 3(V) | 4 | 5(V) | 6 | 7(V) | 8 | 9(V) |
| Glu1 | 0 | 0 | 0 | 0 | 0 | 0 | 0 | 64 | 0 |
| Glu2 | 100 | 64 | 0 | 64 | 0 | 64 | 0 | 0 | 0 |
| CC | 0 | 0 | 0 | 0 | 0 | 0 | 0 | 15 | 15 |
| TOFA | 0 | 15 | 15 | 15 | 15 | 15 | 15 | 0 | 0 |
| Monoethanolamin | 0 | 21 | 21 | 0 | 0 | 0 | 0 | 0 | 0 |
| Di-ethanolamin | 0 | 0 | 0 | 21 | 21 | 0 | 0 | 0 | 0 |
| Tri-ethanolamin | 0 | 0 | 0 | 0 | 0 | 21 | 21 | 21 | 21 |
| Propylenglykol | 0 | 0 | 12,8 | 0 | 12,8 | 0 | 12,8 | 0 | 0 |
| Glycerin | 0 | 0 | 3,5 | 0 | 3,5 | 0 | 3,5 | 0 | 0 |
| Wasser | 0 | 0 | 47,7 | 0 | 47,7 | 0 | 47,7 | 0 | 64 |
| | | | | | | | | | |
| Korrosionsbeurteilung | 2-3 | 0 | 1 - 2 | 0 | 1 - 2 | 0 | 2 | 0 | 2 |

Bestimmung der korrosionsinhibierenden Wirkung von (Glu2) in Gegenwart von Tallölfettsäure und Mono- oder Di- oder Triethanolamin auf Aluminium.

Durchgeführt wird ein Korrosionsschutztest nach EEH1020-AA-1049 mit den Aluminium-Legierungen AlZnMgCu1.5 und AlMgSi 1. Dabei wurden je 2 %ige Testformulierungen der Tabelle 1 mit Wasser mit 20 Deutschen Härtegraden (20° dH) hergestellt und die Prüfkörper aus den oben genannten Legierungen je zur Hälfte in die 40 °C warmen Lösungen eingetaucht und 24 Stunden lang dort belassen. Danach werden die Prüfkörper aus den Lösungen geholt, mit demineralisiertem Wasser und anschließend Aceton abgespült und getrocknet. Sowohl der in die Lösung eingetauchte Teil (Lösung), als auch der überstehende Teil (Atmosphäre) der Prüfkörper wird nach den oben für DIN 51 360 genannten Kriterien beurteilt.

**Tabelle 2: Testformulierungen:**

| Komponente [Gew.-%] | Beispiel | | | | | |
|---|---|---|---|---|---|---|
| | 10 | 11 (V) | 12 | 13 (V) | 14 | 15 (V) |
| Glu2 | 64 | 0 | 64 | 0 | 64 | 0 |
| | | | | | | |
| TOFA | 15 | 15 | 15 | 15 | 15 | 15 |
| Mono-ethanolamin | 21 | 21 | 0 | 0 | 0 | 0 |
| Di-ethanolamin | 0 | 0 | 21 | 21 | 0 | 0 |
| Tri-ethanolamin | 0 | 0 | 0 | 0 | 21 | 21 |
| Propylenglykol | 0 | 12,8 | 0 | 12,8 | 0 | 12,8 |
| Glycerin | 0 | 3,5 | 0 | 3,5 | 0 | 3,5 |
| Wasser | 0 | 47,7 | 0 | 47,7 | 0 | 47,7 |

Die Ergebnisse sind in Tabelle 3 zusammengefasst.

**Tabelle 3: Korrosion von Aluminiumlegierungen in Gegenwart einer Mischung aus N-Methyl-N-acylglucamin (Glu2), Fettsäure und Alkanolaminen (Testformulierung 10, 12 und 14) im Vergleich zu Fettsäure und Alkanolaminen ohne N-Methyl-N-acylglucamin (Testformulierungen 11, 13 und 15)**

| Legierung | | Beispiel | | | | | |
|---|---|---|---|---|---|---|---|
| | | 10 | 11(V) | 12 | 13(V) | 14 | 15(V) |
| AlZnMgCu1,5 | Atmosphäre | 1 | 3 | 0 | 1 - 2 | 0 | 1 |
| AlZnMgCu1,5 | Lösung | 0 | 0 | 0 | 1 | 0 | 0 |
| AlMgSi1 | Atmosphäre | 0 - 1 | 3 | 0 - 1 | 2 | 0 - 1 | 2 |
| AlMgSi1 | Lösung | 0 | 0 | 0 | 0 | 0 | 0 |

## Patentansprüche

1. Emulsionskonzentrat, enthaltend 5 bis 40 Gew.-% einer Zusammensetzung, enthaltend
a) mindestens ein N-Methyl-N-acylglucamin der Formel (I) 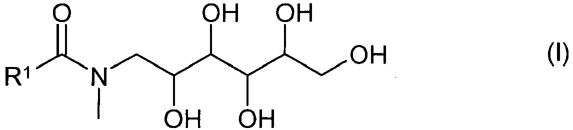 wobei R¹ für eine lineare oder verzweigte, gesättigte oder ungesättigte Kohlenwasserstoffkette mit 7 bis 21 Kohlenstoffatomen steht,
b) eine oder mehrere organische Säuren der Formel (II), bzw deren Salze,
R² - COOM (II)
wobei
R² für eine lineare oder verzweigte Alkylgruppe oder eine lineare oder verzweigte, ein- oder mehrfach ungesättigte Alkenylgruppe mit 5 bis 29 Kohlenstoffatomen, und
M für Wasserstoff oder für ein oder mehrere Kationen stehen, wobei die Kationen in ladungsausgleichenden Mengen vorliegen.
und
c) ein oder mehrere Alkanolamine der Formel (III)
NR¹R²R³ (III)
wobei
R¹, R² und R³ für Wasserstoff, eine lineare oder verzweigte Alkylgruppe mit 1 bis 4 Kohlenstoffatomen, eine Cycloalkylgruppe mit 5 bis 7 Kohlenstoffatomen, eine lineare oder verzweigte Hydroxyalkylgruppe mit 2 bis 5 Kohlenstoffatomen und 1 oder 2 Hydroxygruppen oder eine Hydroxyethergruppe mit 2 bis 6 Kohlenstoffatomen steht, mit der Maßgabe, dass mindestens einer der Reste eine Hydroxyalkylgruppe oder eine Hydroxethergruppe ist, und
60 bis 95 Gew.-% eines oder mehrerer Öle.

2. Emulsionskonzentrat nach Anspruch 1, enthaltend mindestens ein N-Methyl-N-acylglucamin der Formel (I), wobei R¹ für eine lineare oder verzweigte, gesättigte oder ungesättigte Kohlenwasserstoffkette mit 11 bis 17 Kohlenstoffatomen steht.

3. Emulsionskonzentrat nach Anspruch 1, worin die Verbindung der Formel (I) eine Mischung von N-Methyl-N-C₁₂-acylglucamin und N-Methyl-N-C₁₄-acylglucamin ist.

4. Emulsionskonzentrat nach Anspruch 1, worin die Verbindung der Formel (I) eine Mischung von N-Methyl-N-C₁₆-acylglucamin und N-Methly-N-C₁₈-acylglucamin ist.

5. Emulsionskonzentrat nach einem oder mehreren der Ansprüche 1 bis 4, enthaltend eine oder mehrere organische Säuren der Formel (II) oder deren Salze, worin R² 7 bis 21 Kohlenstoffatome umfasst.

6. Emulsionskonzentrat nach Anspruch 5, enthaltend eine oder mehrere organische Säuren der Formel (II) oder deren Salze, worin R² 11 bis 17 Kohlenstoffatome umfasst.

7. Emulsionskonzentrat nach einem oder mehreren der Ansprüche 1 bis 4, enthaltend Tallöl-, Raps- und/oder Sojaölfettsäuren bzw. deren Salze als Bestandteil b).

8. Emulsionskonzentrat nach einem oder mehreren der Ansprüche 1 bis 7, worin das Alkanolamin, welches den Bestandteil c) ausmacht, aus der Gruppe bestehend aus Monoethanolamin, Diethanolamin, Triethanolamin, Diglykolamin, Monoisopropanolamin und 2-Amino-2-methyl-1-propanol ausgewählt ist.

9. Emulsionskonzentrat nach einem oder mehreren der Ansprüche 1 bis 8, enthaltend
a) 1 bis 50 Gew.-% eines oderer mehrerer Methylglucamine gemäß der Formel (I),
b) 0,1 bis 23 Gew.-% mindestens einer organischen Säure oder deren Salz gemäß Formel (II) und
c) 0,05 bis 42 Gew.-% mindestens eines Alkanolamins gemäß Formel (III).

10. Emulsionskonzentrat nach einem oder mehreren der Ansprüche 1 bis 9, enthaltend als zusätzliche Komponente d) einen oder mehrere Bestandteile, ausgewählt aus einem oder mehreren Emulgatoren, einem oder mehrere Bioziden, einem oder mehreren weiteren Korrosionsinhibitoren, einem oder mehreren AW-Addtiven, einem oder mehreren EP-Addtiven, einem oder mehreren Entschäumern, einem oder mehreren Antioxidantien, einem oder mehreren Coupling Agents, einem oder mehreren Alkali- oder Erdalkalimetallen, einem oder mehreren Lösevermittlern, einem oder mehreren pH-Regulatoren, und Wasser.

11. Emulsionskonzentrat nach einem oder mehreren der Ansprüche 1 bis 10, enhaltend einen oder mehrere anionische, nichtionische, kationische oder amphoteren Emulgatoren in Mengen von 0,5 Gew.-%, bis 50 Gew.-%, bezogen auf die Zusammensetzungen, bestehend aus den Komponenten a) bis d).

12. Emulsionskonzentrat nach einem oder mehreren der Ansprüche 1 bis 11, enthaltend 0,001 bis 5 Gew.-% eines oder mehrere Biozide ausgewählt aus der Gruppe bestehend aus Borsäure, 1,2-Benzisothiazol-3-(2H)-on (BIT), 3(2H)-isothiazolon, 2-methyl, Methanol,[1,2-ethanediylbis(oxy)bis-(Glyoxalmonoethylenacetal), Natrium-2-Pyridinthion-1-oxid (Natriumpyrithion), 1,3,5-triazin-1,3,5(2H, 4H, 6H)-triethanol, Morpholin, 4,4'-methylenbis, 1H, 3H, 5H-oxazolo [3,4-c] oxazol, 5-Ethyl-3,7-dioxa-1-azabicyclo [3.3.0] octan, 3-lod-2-propinyl-butyl-carbamat (IPBC).

13. Emulsionskonzentrat nach einem oder mehreren der Ansprüche 1 bis 12, worin M ausgewählt ist aus Li⁺-, Na⁺-, K⁺-, Mg⁺⁺-, Ca⁺⁺-, Al^{+++,} NH₄⁺, Monoalkylammonium-, Dialkylammonium-, Trialkylammonium- und/oder Tetraalkylammoniumionen, und worin die Alkylsubstituenten dieser Amoniumionen unabhängig voneinander (C₁-C₂₂)-Alkylreste sind,

14. Emulsionskonzentrat nach Anspruch 13, worin die Alkylsubstituenten bis zu 3 (C₂-C₁₆)-Hydroxyalkylgruppen tragen.

15. Emulsionskonzentrat nach einem oder mehreren der Ansprüche 1 bis 14, worin R¹ eine Alkyl- oder Alkenylgruppe ist.

16. Emulsionskonzentrat nach einem oder mehreren der Ansprüche 1 bis 15, wobei deren pH zwischen 7 und 12 liegt.

17. Emulsionskonzentrat nach einem oder mehreren der Ansprüche 1 - 16, worin das Öl ausgewählt ist aus Mineralölen mit kinematischen Viskositäten von 5 bis 1000 mm²/s, gemessen bei 40 °C, Paraffinen, Isoparaffinen, Cycloparaffinen, aromatischen Kohlenwasserstoffen, Poly-alpha-Olefinen, Polyalkylenglykolen (PAG) und Esterölen.

## Claims

1. An emulsion concentrate containing 5% to 40% by weight of a composition comprising
a) at least one N-methyl-N-acylglucamine of the formula (I) 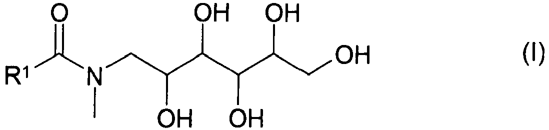 where R¹ is a linear or branched, saturated or unsaturated hydrocarbyl chain having 7 to 21 carbon atoms,
b) one or more organic acids of the formula (II), or salts thereof,
R² - COOM (II)
where
R² is a linear or branched alkyl group or a linear or branched, mono- or polyunsaturated alkenyl group having 5 to 29 carbon atoms, and
M is hydrogen or one or more cations, where the cations are present in charge-balancing amounts,
and
c) one or more alkanolamines of the formula (III)
NR¹R²R³ (III)
where
R¹, R² and R³ are hydrogen, a linear or branched alkyl group having 1 to 4 carbon atoms, a cycloalkyl group having 5 to 7 carbon atoms, a linear or branched hydroxyalkyl group having 2 to 5 carbon atoms and 1 or 2 hydroxyl groups or a hydroxy ether group having 2 to 6 carbon atoms, with the proviso that at least one of the radicals is a hydroxyalkyl group or a hydroxy ether group, and
60 to 95% by weight of one or more oils.

2. The emulsion concentrate as claimed in claim 1, comprising at least one N-methyl-N-acylglucamine of the formula (I) where R¹ is a linear or branched, saturated or unsaturated hydrocarbyl chain having 11 to 17 carbon atoms.

3. The emulsion concentrate as claimed in claim 1, in which the compound of the formula (I) is a mixture of N-methyl-N-C₁₂-acylglucamine and N-methyl-N-C₁₄-acylglucamine.

4. The emulsion concentrate as claimed in claim 1, in which the compound of the formula (I) is a mixture of N-methyl-N-C₁₆-acylglucamine and N-methyl-N-C₁₈-acylglucamine.

5. The emulsion concentrate as claimed in one or more of claims 1 to 4, comprising one or more organic acids of the formula (II) or salts thereof, in which R² comprises 7 to 21 carbon atoms.

6. The emulsion concentrate as claimed in claim 5, comprising one or more organic acids of the formula (II) or salts thereof, in which R² comprises 11 to 17 carbon atoms.

7. The emulsion concentrate as claimed in one or more of claims 1 to 4, comprising tall oil fatty acids, rapeseed oil fatty acids and/or soya oil fatty acids or salts thereof as constituent b).

8. The emulsion concentrate as claimed in one or more of claims 1 to 7, in which the alkanolamine which makes up constituent c) is selected from the group consisting of monoethanolamine, diethanolamine, triethanolamine, diglycolamine, monoisopropanolamine and 2-amino-2-methyl-1-propanol.

9. The emulsion concentrate as claimed in one or more of claims 1 to 8, containing
a) 1% to 50% by weight of one or more methylglucamines of the formula (I),
b) 0.1% to 23% by weight of at least one organic acid, or salt thereof, of formula (II) and
c) 0.05% to 42% by weight of at least one alkanolamine of formula (III).

10. The emulsion concentrate as claimed in one or more of claims 1 to 9, comprising, as additional component d), one or more constituents selected from one or more emulsifiers, one or more biocides, one or more further corrosion inhibitors, one or more AW additives, one or more EP additives, one or more defoamers, one or more antioxidants, one or more coupling agents, one or more alkali metals or alkaline earth metals, one or more solubilizers, one or more pH regulators, and water.

11. The emulsion concentrate as claimed in one or more of claims 1 to 10, comprising one or more anionic, nonionic, cationic or amphoteric emulsifiers in amounts of 0.5% to 50% by weight, based on the compositions consisting of components a) to d).

12. The emulsion concentrate as claimed in one or more of claims 1 to 11, containing 0.001% to 5% by weight of one or more biocides selected from the group consisting of boric acid, 1,2-benzisothiazol-3-(2H)-one (BIT), 3(2H)-isothiazolone, 2-methyl, methanol [1,2-ethanediylbis(oxy)bis(glyoxal monoethylene acetal)], sodium 2-pyridinethione-1-oxide (sodium pyrithione), 1,3,5-triazine-1,3,5(2H,4H,6H)-triethanol, morpholine, 4,4'-methylenebis(1H,3H,5H)oxazolo[3,4-c]oxazole, 5-ethyl-3,7-dioxa-1-azabicyclo[3.3.0]octane, 3-iodo-2-propynyl butyl carbamate (IPBC).

13. The emulsion concentrate as claimed in one or more of claims 1 to 12, in which M is selected from Li⁺, Na⁺, K⁺, Mg⁺⁺, Ca⁺⁺, Al⁺⁺⁺, NH₄⁺, monoalkylammonium, dialkylammonium, trialkylammonium and/or tetraalkylammonium ions, and in which the alkyl substituents of these ammonium ions are each independently (C₁-C₂₂)-alkyl radicals.

14. The emulsion concentrate as claimed in claim 13, in which the alkyl substituents bear up to 3 (C₂-C₁₀)-hydroxyalkyl groups.

15. The emulsion concentrate as claimed in one or more of claims 1 to 14, in which R¹ is an alkyl or alkenyl group.

16. The emulsion concentrate as claimed in one or more of claims 1 to 15, wherein the pH thereof is between 7 and 12.

17. The emulsion concentrate as claimed in one or more of claims 1-16, wherein the oil is selected from mineral oils having kinematic viscosities of 5 to 1000 mm²/s, measured at 40°C, paraffins, isoparaffins, cycloparaffins, aromatic hydrocarbons, poly-alphaolefins, polyalkylene glycols (PAGs) and ester oils.

## Revendications

1. Concentré d'émulsion, contenant 5 à 40 % en poids d'une composition, contenant :
a) au moins une N-méthyl-N-acylglucamine de formule (I) 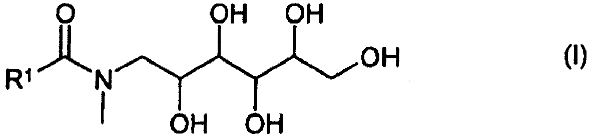 dans laquelle R¹ représente une chaîne hydrocarbonée linéaire ou ramifiée, saturée ou insaturée, de 7 à 21 atomes de carbone,
b) un ou plusieurs acides organiques de formule (II) ou leurs sels
R²-COOM (II)
dans laquelle
R² représente un groupe alkyle linéaire ou ramifié ou un groupe alcényle linéaire ou ramifié, mono- ou polyinsaturé, de 5 à 29 atomes de carbone, et
M représente l'hydrogène ou un ou plusieurs cations, les cations étant présents en quantités compensant la charge,
et
c) une ou plusieurs alcanolamines de formule (III)
NR¹R²R³ (III)
dans laquelle
R¹, R² et R³ représentent l'hydrogène, un groupe alkyle linéaire ou ramifié de 1 à 4 atomes de carbone, un groupe cycloalkyle de 5 à 7 atomes de carbone, un groupe hydroxyalkyle linéaire ou ramifié de 2 à 5 atomes de carbone et 1 ou 2 groupes hydroxy ou un groupe hydroxyéther de 2 à 6 atomes de carbone, à condition qu'au moins un des radicaux soit un groupe hydroxyalkyle ou un groupe hydroxyéther, et
60 à 95 % en poids d'une ou de plusieurs huiles.

2. Concentré d'émulsion selon la revendication 1, contenant au moins une N-méthyl-N-acylglucamine de formule (I), dans laquelle R¹ représente une chaîne hydrocarbonée linéaire ou ramifiée, saturée ou insaturée, de 11 à 17 atomes de carbone.

3. Concentré d'émulsion selon la revendication 1, dans laquelle le composé de formule (I) est un mélange de N-méthyl-N-acylglucamine en C₁₂ et de N-méthyl-N-acylglucamine en C₁₄.

4. Concentré d'émulsion selon la revendication 1, dans lequel le composé de formule (I) est un mélange de N-méthyl-N-acylglucamine en C₁₆ et de N-méthyl-N-acylglucamine en C₁₈.

5. Concentré d'émulsion selon une ou plusieurs des revendications 1 à 4, contenant un ou plusieurs acides organiques de formule (II) ou leurs sels, dans laquelle R² comprend 7 à 21 atomes de carbone.

6. Concentré d'émulsion selon la revendication 5, contenant un ou plusieurs acides organiques de formule (II) ou leurs sels, dans laquelle R² comprend 11 à 17 atomes de carbone.

7. Concentré d'émulsion selon une ou plusieurs des revendications 1 à 4, contenant des acides gras de tall oil, d'huile de colza et/ou de soja ou leurs sels en tant que constituant b).

8. Concentré d'émulsion selon une ou plusieurs des revendications 1 à 7, dans lequel l'alcanolamine, qui compose le constituant c), est choisie dans le groupe constitué par la monoéthanolamine, la diéthanolamine, la triéthanolamine, la diglycolamine, la monoisopropanolamine et le 2-amino-2-méthyl-1-propanol.

9. Concentré d'émulsion selon une ou plusieurs des revendications 1 à 8, contenant :
a) 1 à 50 % en poids d'une ou de plusieurs méthylglucamines de formule (I),
b) 0,1 à 23 % en poids d'au moins un acide organique ou son sel de formule (II), et
c) 0,05 à 42 % en poids d'au moins une alcanolamine de formule (III).

10. Concentré d'émulsion selon une ou plusieurs des revendications 1 à 9, contenant en tant que composant supplémentaire d) un ou plusieurs constituants choisis parmi un ou plusieurs émulsifiants, un ou plusieurs biocides, un ou plusieurs inhibiteurs de corrosion supplémentaires, un ou plusieurs additifs AW, un ou plusieurs additifs EP, un ou plusieurs démousseurs, un ou plusieurs antioxydants, un ou plusieurs agents de couplage, un ou plusieurs métaux alcalins ou alcalino-terreux, un ou plusieurs solubilisants, un ou plusieurs régulateurs de pH et de l'eau.

11. Concentré d'émulsion selon une ou plusieurs des revendications 1 à 10, contenant un ou plusieurs émulsifiants anioniques, non ioniques, cationiques ou amphotères en quantités de 0,5 % en poids à 50 % en poids, par rapport aux compositions constituées des composants a) à d) .

12. Concentré d'émulsion selon une ou plusieurs des revendications 1 à 11, contenant 0,001 à 5 % en poids d'un ou de plusieurs biocides choisis dans le groupe constitué par l'acide borique, la 1,2-benzisothiazol-3-(2H)-one (BIT), la 3(2H)-isothiazolone, le 2-méthyl, méthanol,[1,2-éthane-diylbis(oxy)bis-(glyoxalmonoéthylène-acétal), le 2-pyridine-thione-1-oxyde de sodium (pyrithione de sodium), le 1,3,5-triazine-1,3,5(2H,4H,6H)-triéthanol, la morpholine, le 4,4'-méthylène-bis,1H,3H,5H-oxazolo-[3,4-c]-oxazole, le 5-éthyl-3,7-dioxa-1-azabicyclo-[3.3.0]octane, le carbamate de 3-iodo-2-propinyl-butyle (IPBC).

13. Concentré d'émulsion selon une ou plusieurs des revendications 1 à 12, dans lequel M est choisi parmi les ions Li⁺, Na⁺, K⁺, Mg⁺⁺, Ca⁺⁺, Al⁺⁺⁺, NH₄⁺, monoalkylammonium, dialkylammonium, trialkylammonium et/ou tétraalkylammonium, et dans lequel les substituants alkyle de ces ions ammonium sont indépendamment les uns des autres des radicaux alkyle en (C₁-C₂₂).

14. Concentré d'émulsion selon la revendication 13, dans lequel les substituants alkyle portent jusqu'à 3 groupes hydroxyalkyle en (C₂-C₁₀).

15. Concentré d'émulsion selon une ou plusieurs des revendications 1 à 14, dans lequel R¹ est un groupe alkyle ou alcényle.

16. Concentré d'émulsion selon une ou plusieurs des revendications 1 à 15, dans lequel son pH est compris entre 7 et 12.

17. Concentré d'émulsion selon une ou plusieurs des revendications 1 à 16, dans lequel l'huile est choisie parmi les huiles minérales ayant des viscosités cinématiques de 5 à 1 000 mm²/s, mesurées à 40 °C, les paraffines, les isoparaffines, les cycloparaffines, les hydrocarbures aromatiques, les poly-alpha-oléfines, les polyalkylène glycols (PAG) et les huiles d'esters.
